# FASCICULE DE BREVET EUROPEEN

(11) **EP 1 020 670 B1**
(45) Date de publication et mention de la délivrance du brevet: **02.06.2004**
(21) Numéro de dépôt: 00200166.7
(22) Date de dépôt: 17.01.2000
(51) Int. Cl.: F16K 24/04, F16K 17/36

(54) **Système de mise à l'air de réservoir à liquide**
Entlüftungssystem für Flüssigkeitsbehälter
Venting system for fluid reservoir

(30) Priorité: 18.01.1999 BE 9900034
(43) Date de publication de la demande: 19.07.2000
(73) Titulaire: Inergy Automotive Systems Research (SA), 1120 Bruxelles (BE)
(72) Inventeur: Ganachaud, Patrick, 53000 Laval (FR); Percebois, Serge, 53230 Courbeveille (FR)
(74) Mandataire: Decamps, Alain René François

(56) Documents cités:
- DE-A- 19 705 440
- US-A- 5 247 958
- US-A- 5 392 804
- US-A- 5 577 526
- US-A- 5 755 252

## Description

La présente invention concerne un système de mise à l'air de réservoir à liquide.

Les réservoirs à liquide, lorsqu'ils sont susceptibles d'être déplacés avec le liquide qu'ils contiennent sont généralement équipés d'un système de ventilation garantissant la sécurité par rapport à l'environnement alors que le réservoir est soumis à des sollicitations diverses : mouvements en tous sens et de toute amplitude, sollicitations thermiques, dépressions et surpressions.

Cette exigence est rencontrée dans le cas de réservoirs à carburant, en particulier lorsqu'ils sont montés sur des véhicules automobiles et qu'il est impératif d'empêcher la sortie de carburant liquide et de gérer les changements importants de pression et volume de gaz au cours du remplissage et pendant la totalité de la durée du stockage dans le réservoir.

Des solutions ont été développées pour résoudre ces problèmes, qui mettent en oeuvre des clapets de sécurité plongeant dans le réservoir et dont la partie supérieure traverse une paroi de celui-ci. Ces clapets débouchent généralement sur une conduite menant à un boîtier ou canister contenant une matière capable de piéger les vapeurs de liquide présentes dans les gaz en provenance du réservoir. Il n'est pas rare, toutefois, que des systèmes de ce type présentent encore des difficultés du fait qu'en raison des circonstances particulières d'utilisation, telles que mouvements brusques ou inclinaison excessive du véhicule, du liquide provenant du réservoir peut néanmoins passer la barrière du clapet de sécurité et se retrouver dans la conduite menant au canister, voire atteindre celui-ci et perturber le libre passage des vapeurs.

En remède à cet entraînement accidentel de liquide hors du réservoir, on a cherché à retenir le liquide qui s'échapperait par la conduite menant au canister en intercalant dans cette conduite un volume mort destiné à jouer le rôle de capacité pour recueillir le liquide et laisser passer librement les vapeurs.

Par ailleurs, lorsqu'il n'est pas possible de les intégrer dans le clapet de sécurité lui-même, des dispositifs de sécurité assurant l'interdiction de sur-remplissage du réservoir (dispositif « ISR ») ainsi que sa fermeture automatique en cas de retournement (dispositif « ROV » ou Roll-Over-Valve) doivent aussi être montés sur le réservoir ou dans son environnement proche. Des canalisations multiples relient alors entre eux le clapet, les dispositifs ISR et ROV ainsi que le canister. Ces canalisations et les nombreux raccords qu'elles nécessitent sont souvent la source de microfuites inacceptables en vue du programme et des objectifs de réduction drastique d'émissions EURO 2000. Il n'est pas rare non plus que ces canalisations multiples présentent des points bas et des siphons dans lesquels de petites quantités de liquide viennent s'accumuler et former autant d'obstacles au libre passage des gaz.

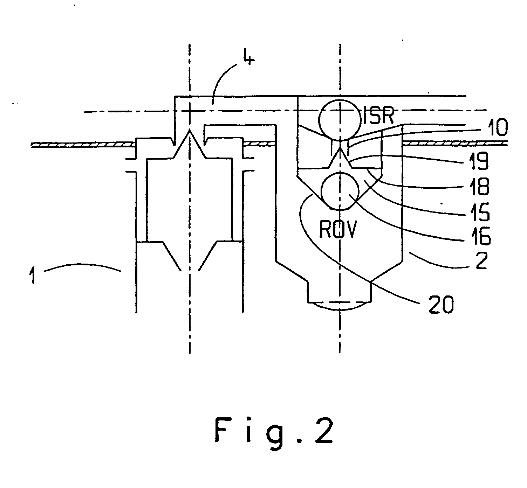

Il est connu par la demande de brevet britannique GB-A-2 269 375 d'utiliser une capacité aux parois étanches au liquide, intégrée à l'intérieur d'un réservoir à carburant, dans laquelle on loge un clapet de sécurité (voir figure 2 dudit brevet). Une ouverture calibrée 14 pratiquée au sommet de la capacité permet l'entrée du liquide lors d'inclinaisons trop importantes ou de mouvements trop violents du réservoir. Une soupape anti-retour 12 en forme de bec de canard permet la vidange de la capacité 11 lorsque le niveau du liquide a baissé.

Dans ce système, il subsiste cependant des problèmes liés à la fermeture intempestive du clapet ainsi qu'à l'augmentation de pression dans le réservoir qui peut perturber le bon fonctionnement du moteur. Par ailleurs, lorsque des gouttelettes de liquide de petite taille sont entraînées par l'orifice 14, elles peuvent, en raison de leur faible poids, être entraînées directement par le flux gazeux vers la canalisation de mise à l'air 7, sans tomber dans la capacité 11. Les dispositifs ISR et ROV doivent en outre encore être connectés au clapet à l'aide de canalisations externes au réservoir.

L'invention vise à remédier aux inconvénients des systèmes de ventilation connus en fournissant un système qui évite le placement d'une capacité sur les canalisations externes au réservoir, permet la vidange du liquide retenu dans la capacité en cas de baisse de niveau de liquide dans le réservoir, respecte les normes environnementales les plus sévères et ne provoque pas de surpression à l'intérieur du réservoir.

A cet effet l'invention concerne un système de mise à l'air d'un réservoir à liquide comprenant, d'une part, un clapet à flotteur disposé dans le réservoir en communication avec un conduit de mise à l'air et, d'autre part, un volume fermé interne au réservoir et muni d'un dispositif de vidange, qui fait office de capacité destinée à recueillir et retenir des entraînements éventuels de liquide provenant du réservoir, selon lequel le clapet à flotteur est situé hors du volume de la capacité et est relié à celle-ci au moyen du conduit du circuit de mise à l'air.

De préférence, le conduit de mise à l'air en communication avec le clapet constitue une extrémité d'un circuit de mise à l'air. Le circuit de mise à l'air peut être unique ou, au contraire, être présent en plusieurs exemplaires. De manière plus préférée encore, ce conduit constitue l'extrémité du circuit unique de mise à l'air.

Le réservoir à liquide est une enceinte fermée, de formes diverses, généralement étanche vis-à-vis de l'extérieur, qui peut être équipé de divers accessoires internes ou traversant la paroi de l'enceinte. Le réservoir peut contenir tout type de liquide organique, inorganique ou mélange de tels liquides. En particulier, il est un réservoir à carburant pour véhicules automobiles. Tous les types de carburant utilisés par les véhicules automobiles peuvent être stockés dans le réservoir à liquide et, en particulier, l'essence et le gasoil.

Le système de mise à l'air de réservoir à liquide objet de l'invention est un dispositif comprenant plusieurs éléments dont la fonction globale est de permettre le dégazage d'un réservoir lors de son remplissage et sa ventilation en période d'utilisation et de consommation du liquide qu'il contient, tout en maintenant l'environnement extérieur à l'abri de toute fuite ou émanation de gaz indésirables.

Le système de mise à l'air selon l'invention comprend un clapet à flotteur, c'est-à-dire un dispositif permettant l'ouverture du réservoir à l'aide d'une soupape commandée par le déplacement d'un flotteur entraîné par le niveau de liquide présent dans le réservoir.

Selon l'invention, le clapet à flotteur est disposé complètement à l'intérieur du réservoir.

Alternativement, le clapet à flotteur peut aussi être disposé dans le réservoir et posséder une partie supérieure qui traverse une paroi de ce réservoir. La traversée de la paroi du réservoir par la partie supérieure du clapet est réalisée dans des conditions étanches par toute technique appropriée et bien connue par elle-même. Comme exemple de technique d'étanchéité que l'on peut utiliser, on peut citer, de manière non limitative, la soudure de la partie supérieure du clapet avec la paroi découpée du réservoir, le serrage étanche ou l'utilisation d'un joint d'étanchéité adapté à la nature du liquide contenu.

La partie supérieure du clapet émergeant de la paroi du réservoir est, dans le système de mise à l'air selon l'invention, en communication avec un conduit qui constitue une extrémité d'un circuit de mise à l'air. En d'autres termes, les gaz sortant du réservoir ou y entrant circulent dans ce conduit qui est relié d'un côté de manière étanche à la partie supérieure du clapet débouchant sur la soupape actionnée par le flotteur et qui communique de l'autre côté avec un circuit aboutissant à l'atmosphère extérieure.

Selon l'invention, le système de mise à l'air comprend aussi un volume fermé interne au réservoir. Par volume fermé, on entend désigner un volume de forme quelconque délimité par des parois étanches aux liquides et aux gaz. Ce volume est disposé à l'intérieur du réservoir et communique avec le clapet au moyen du conduit de mise à l'air dont une extrémité est reliée au clapet. Sa fonction est de constituer une capacité capable de recueillir et de retenir les entraînements éventuels de liquide provenant du réservoir qui auraient franchi la barrière du clapet.

Le volume de cette capacité est choisi de taille suffisante pour recueillir l'ensemble des entraînements liquides susceptibles de franchir la barrière du clapet lors de circonstances particulières, notamment lorsque le réservoir est plein ou proche de son niveau de remplissage maximum. Ce volume dépend aussi des dimensions et de la conception même du clapet ainsi que du diamètre du conduit le reliant à celui-ci.

Selon l'invention, le volume fermé interne au réservoir faisant office de capacité du système de mise à l'air comprend un dispositif de vidange. Par dispositif de vidange, on entend désigner une soupape, située en un point bas de la capacité, qui peut s'ouvrir lorsqu'un poids suffisant de liquide a été recueilli dans cette capacité et qui communique directement avec le volume intérieur du réservoir. La fonction de ce dispositif de vidange est de recycler le liquide qui a été entraîné avec les gaz sortant du réservoir et d'empêcher un remplissage de la capacité au-delà d'un niveau maximum prédéterminé dépendant de la forme de cette capacité et des caractéristiques de la soupape.

Selon l'invention, le clapet à flotteur est situé hors du volume de la capacité. Il peut, indifféremment, être situé dans le voisinage immédiat de la capacité ou, au contraire, être situé dans une région du réservoir éloignée de cette dernière. Dans chaque cas, toutefois, le clapet à flotteur est relié à la capacité au moyen du conduit de mise à l'air décrit *supra.*

Selon une première forme de réalisation avantageuse du système de mise à l'air conforme à l'invention, il comprend un dispositif d'interdiction de sur-remplissage (en abrégé « ISR »). La fonction du dispositif ISR est de fixer le volume utile du réservoir et d'empêcher, pendant l'opération de remplissage, le dépassement d'un niveau prédéterminé de liquide dans le réservoir.

Le dispositif ISR selon cette forme de réalisation peut être choisi parmi tous les dispositifs connus pour remplir cette fonction. Le dispositif ISR particulier à bille dense obturant par gravité le conduit de sortie des gaz de la capacité a donné de bons résultats.

De préférence, le dispositif ISR est logé dans la partie supérieure de la capacité, à l'intérieur de celle-ci.

Selon une forme de réalisation avantageuse du système de mise à l'air, le dispositif de vidange de la capacité est constitué par une soupape à membrane qui ferme un orifice situé dans un point bas de la capacité. Une membrane en matériau élastomère en forme de parapluie renversé a donné d'excellents résultats.

On peut aussi avantageusement combiner ce dispositif de vidange à membrane avec la forme de réalisation particulière du dispositif ISR logé dans la partie supérieure de la capacité décrite ci-dessus.

Selon une variante du système de mise à l'air conforme à l'invention, le clapet à flotteur surmonte un dispositif à bille dense reposant dans un puits ajouré et ayant pour fonction d'entraîner la fermeture du clapet en cas de retournement du réservoir. Ce dispositif réalise ainsi une fonction de fermeture automatique du réservoir dès que celui-ci amorce un retournement (fonction abrégée en « ROV », ou « Roll-Over-Valve »).

Avantageusement, cette variante est associée au système de mise à l'air particulier qui comprend un dispositif ISR logé dans la partie supérieure de la capacité décrit *supra.*

Une autre variante à la forme de réalisation particulière du système de mise à l'air consiste à incorporer un dispositif assurant la fonction ROV à l'intérieur de la capacité, dans une cage dont le fond est en forme de puits ajouré dans lequel repose une bille dense qui, lorsqu'elle se déplace, repousse vers le haut une soupape capable d'obturer le conduit de sortie. Cette soupape peut, par exemple, prendre la forme d'une plaque portant en son centre une protubérance qui peut coopérer avec l'entrée du conduit d'évacuation des gaz de manière à réaliser une fermeture étanche lorsqu'elle se déplace vers le haut sous l'effet du déplacement de la bille et vient se mettre en contact avec l'entrée de ce conduit.

Cette variante convient bien dans le cas de systèmes de mise à l'air qui comprennent un dispositif ISR logé dans la partie supérieure de la capacité. Dans ce cas, le conduit de sortie mène directement au dispositif ISR.

Une deuxième forme de réalisation du système de mise à l'air selon l'invention consiste à placer un dispositif ISR en un point du conduit de mise à l'air qui relie le clapet à flotteur à la capacité, en amont de celle-ci. Par le terme « amont », on entend désigner un endroit situé du côté d'où proviennent les gaz, lorsqu'ils s'échappent hors du réservoir. Dans cette configuration, le dispositif ISR est situé dans le conduit des gaz, entre le clapet et la capacité.

Selon une variante au système de mise à l'air selon l'invention, la vidange de la capacité s'effectue via l'ouverture d'un deuxième clapet à flotteur monté sous la capacité et dont le flotteur coulisse dans un fût plongeant dans le réservoir et ouvre une soupape constituée par la coopération d'un pointeau solidaire du flotteur et d'une ouverture située dans le fond de ladite capacité.

Cette variante est bien adaptée aux systèmes de mise à l'air de la deuxième forme de réalisation détaillée ci-dessus, c'est-à-dire ceux qui comprennent un dispositif ISR situé en un point du conduit de mise à l'air reliant le clapet à flotteur à la capacité.

Dans une autre forme de réalisation du système de mise à l'air conforme à l'invention, un dispositif assurant une fonction ROV peut être disposé en un point d'un conduit reliant la capacité à un canister, en aval de celle-ci. Par le vocable « aval », il faut entendre, en conformité avec le sens du vocable « amont » défini plus haut, un endroit situé du côté vers lequel se dirigent les gaz, lorsqu'ils s'échappent du réservoir.

Dans cette forme de réalisation, le dispositif assurant la fonction ROV participe au même principe que celui décrit plus haut. Il peut consister en tout système capable d'assurer une fonction identique ou équivalente. En particulier, il peut consister en un dispositif à bille dense reposant dans un puits ajouré tels que décrit *supra* dans le cas de la première forme de réalisation.

En particulier, cette forme de réalisation est bien compatible avec la deuxième forme de réalisation décrite ci-dessus. De manière plus particulière encore, cette forme de réalisation est avantageusement compatible avec le système de mise à l'air comprenant un dispositif ISR situé en un point du conduit de mise à l'air reliant le clapet à flotteur à la capacité et dans lequel la vidange de la capacité s'effectue via l'ouverture d'un deuxième clapet à flotteur monté sous celle-ci, tel que décrit *supra.*

En variante, on peut aussi incorporer un dispositif assurant une fonction ROV à l'intérieur de la capacité, dans la partie supérieure de celle-ci. De préférence, la fonction ROV est assurée par un dispositif à bille dense reposant dans une cage dont le fond est en forme de puits ajouré, de manière que lorsque la bille se déplace, elle repousse vers le haut une soupape capable d'obturer le conduit de sortie des gaz menant à un canister.

En particulier, cette variante est bien compatible avec la deuxième forme de réalisation décrite ci-dessus. De manière plus particulière encore, cette variante est avantageusement compatible avec le système de mise à l'air comprenant un dispositif ISR situé en un point du conduit de mise à l'air reliant le clapet à flotteur à la capacité et dans lequel la vidange de la capacité s'effectue via l'ouverture d'un deuxième clapet à flotteur monté sous celle-ci, tel que décrit *supra.*

Une autre variante au système de mise à l'air selon l'invention est d'utiliser deux dispositifs à bille dense, le premier disposé sous le clapet à flotteur principal et le deuxième sous le clapet à flotteur qui obture le fond de la capacité. Par clapet à flotteur principal, on désigne le premier clapet que rencontrent les gaz lorsqu'ils s'échappent du réservoir.

En particulier, cette autre variante est bien compatible avec la deuxième forme de réalisation décrite ci-dessus. De manière plus particulière encore, cette autre variante est avantageusement compatible avec le système de mise à l'air comprenant un dispositif ISR situé en un point du conduit de mise à l'air reliant le clapet à flotteur à la capacité et dans lequel la vidange de la capacité s'effectue via l'ouverture d'un deuxième clapet à flotteur monté sous celle-ci, tel que décrit *supra.*

De préférence, les conduits aboutissant à, ou partant de la capacité sont solidaires du réservoir. On peut les fixer au réservoir par toute technique connue, telle que clipsage, collage, soudage, ...On préfère tout particulièrement qu'ils soient soudés au réservoir, ou qu'ils fassent partie intégrante des parois de celui-ci, par exemple lorsqu'ils sont mis en forme en même temps que le réservoir, pendant les opérations de fabrication de ce dernier.

De manière la plus préférée, ces conduits sont en outre solidaire des différents organes spécifiques qu'ils relient (clapet, capacité, canister et, éventuellement, dispositifs ISR et/ou ROV). Les meilleurs résultats sont obtenus lorsqu'ils sont soudés à ces organes, ou encore lorsqu'ils sont fabriqués de manière à constituer un seul et même objet complexe comprenant le réservoir, les conduits et tous les organes.

La présente invention a aussi pour objet l'utilisation du système de mise à l'air décrit *supra* pour mettre à l'air un réservoir à carburant dans un véhicule automobile.

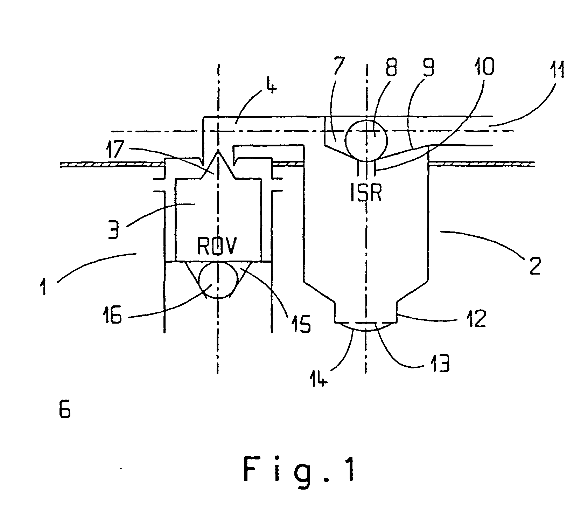

Les figures 1 à 6 jointes en annexe illustrent de manière non limitative et schématique le principe de certaines variantes de l'invention, à titre d'exemple.

Les figures 1 à 3 représentent des systèmes de mise à l'air selon la première forme de réalisation explicitée plus haut, dans laquelle le dispositif ISR est logé dans la partie supérieure de la capacité.

La figure 1 représente, plus particulièrement un système de mise à l'air d'un réservoir 6 à essence, monté sur un véhicule, comprenant un clapet 1 à flotteur 3 et une capacité 2 disposée à proximité. Le flotteur 3 du clapet 1 supporte un pointeau 17 qui lui est solidaire et vient obturer la sortie des gaz lorsque le niveau de l'essence devient suffisamment élevé. Un conduit 4, solidaire d'une paroi 5 du réservoir 6 dans lequel plongent le clapet 1 et la capacité 2, relie la partie supérieure du clapet 1 à celle de la capacité 2. A la partie supérieure de la capacité 2 a été logé un dispositif ISR 7 à bille dense 8 reposant par gravité sur une surface tronconique 9 et obturant au repos le conduit 10 de sortie des gaz dont l'extrémité 11 est reliée à un canister (non illustré). La partie inférieure 12 de la capacité 2 est percée d'un orifice 13 obturé par une membrane déformable 14, en forme de parapluie renversé, qui fait office de vanne anti-retour. Un dispositif ROV à bille dense reposant dans un puits ajouré 15 est disposé sous le flotteur 3 du clapet 1 et a pour fonction d'entraîner le flotteur 3 du clapet 1 vers le haut lorsque le réservoir 6 amorce un mouvement de retournement.

Lorsque le véhicule est en mouvement ou lorsqu'on remplit le réservoir, véhicule à l'arrêt, les gaz en provenance de l'intérieur du réservoir 6 pénètrent le clapet 1 via des orifices (non illustrés) situés à la partie supérieure des parois verticales de ce dernier, d'où ils s'échappent via le conduit 4, la capacité 2 et le dispositif ISR 7 vers l'extrémité 11 du conduit conduisant au canister. Si, suite par exemple à des mouvements violents de l'essence dans le réservoir lors du remplissage ou d'un déplacement du véhicule avec son réservoir rempli jusqu'à un niveau élevé proche du maximum autorisé, de l'essence était entraînée avec les gaz dans la tubulure 4, il tomberait au fond de la capacité 2 et demeurerait retenu dans celle-ci, alors que les gaz poursuivraient leur chemin vers la sortie 11 et le canister. Dès que le véhicule est à l'arrêt et qu'aucune différence de pression induite par le flux de gaz s'échappant du réservoir ne subsiste, l'essence retenue prisonnière dans la capacité 2 ouvre la membrane 14 sous l'influence de son propre poids, traverse l'orifice 13 et retourne dans le réservoir 6. La membrane 13 est choisie de manière telle qu'elle se déforme et s'ouvre sous le poids, dans la capacité 2, d'une hauteur d'essence donnée inférieure à la hauteur totale du volume disponible à l'intérieur de la capacité.

Le système de mise à l'air conforme à la figure 1 permet de remplir une fonction intéressante supplémentaire, à savoir la ventilation du réservoir dans les situations de dépression de son atmosphère interne alors que le clapet 1 est fermé. Cette situation peut devenir dangereuse lorsqu'il y a consommation simultanée et prélèvement en continu d'une quantité substantielle de carburant et peut, dans certains cas, donner lieu à l'implosion des parois du réservoir. Elle peut survenir alors que le réservoir est rempli jusqu'à un niveau proche de son niveau maximum et que le véhicule gravit une pente de degré important, provoquant la fermeture du clapet 1 par déplacement du flotteur 3. Dans cette situation, la membrane 14 s'ouvre sous l'influence de la différence de pression de part et d'autre de ses parois due à la dépression qui s'installe dans le réservoir et permet ainsi l'entrée d'air via la capacité 2 connectée avec le conduit 11 menant au canister et à l'atmosphère extérieure.

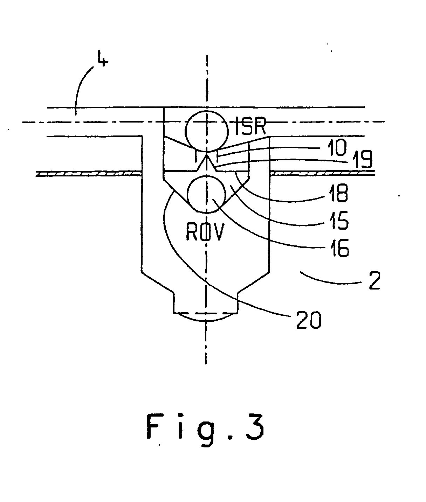

Les figures 2 et 3 illustrent des systèmes de mise à l'air comparables à celui de la figure 1, dans lesquels le dispositif ROV 15 et 16 a été incorporé dans la capacité, sous le dispositif ISR. La figure 2 représente un système où le clapet 1 se trouve à proximité immédiate de la capacité 2, tandis qu'à la figure 3, le clapet (non illustré) est disposé en un tout autre endroit du réservoir. Dans les deux cas, le conduit 4 relie le clapet à la capacité 2. Dans le dispositif ROV 15 et 16, une plaque 18 porte une protubérance 19 en son centre, capable de coopérer avec l'ouverture du conduit d'entrée 10 du dispositif ISR pour réaliser une soupape étanche aux liquides et aux gaz. Une bille 16 en matière dense repose dans un puits ajouré 20 et entraîne la plaque 18 vers le haut lorsque le réservoir 6 amorce un retournement.

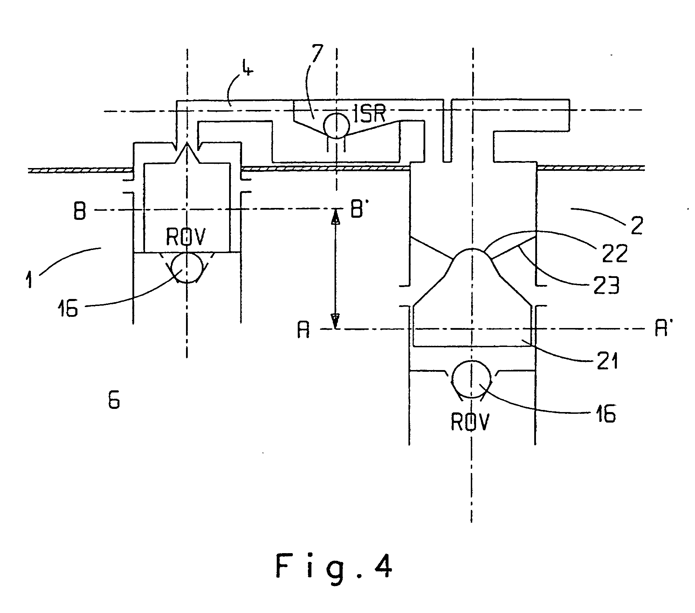

Les figures 4 à 6 représentent des systèmes de mise à l'air selon la deuxième forme de réalisation selon laquelle un dispositif ISR 7 est situé en un point du conduit 4 de mise à l'air reliant le clapet à flotteur 1 à la capacité 2. Un deuxième clapet à flotteur 21, surmonté d'un pointeau 22, est monté sous la capacité 2 et permet d'obturer le fond 23 de celle-ci.

Cette forme de réalisation convient tout particulièrement bien pour les réservoirs à essence qui équipent les véhicules automobiles. En effet, grâce à la position du dispositif ISR 7 en amont de la capacité 2, l'alimentation du moteur en carburant peut se faire, dès que le niveau d'essence dans le réservoir a baissé sous le niveau qui déclenche la fermeture du deuxième clapet à flotteur 21, sous une pression qui ne dépasse quasi pas, la pression atmosphérique régnant à l'extérieur du réservoir, éliminant du même coup les difficultés liées à des surpressions dans les réservoirs alors que les véhicules sont à l'arrêt, moteur tournant au ralenti.

A la figure 4, la fonction ROV est assurée par la présence de deux dispositifs ROV à bille dense situés, respectivement, sous le clapet à flotteur principal 1 et sous le deuxième clapet à flotteur 21 situé sous la capacité 2. Dans ces deux dispositifs, les billes de matière dense 16 ont pour fonction de repousser le flotteur qui les surmonte vers le haut dès que le réservoir 6 amorce un retournement.

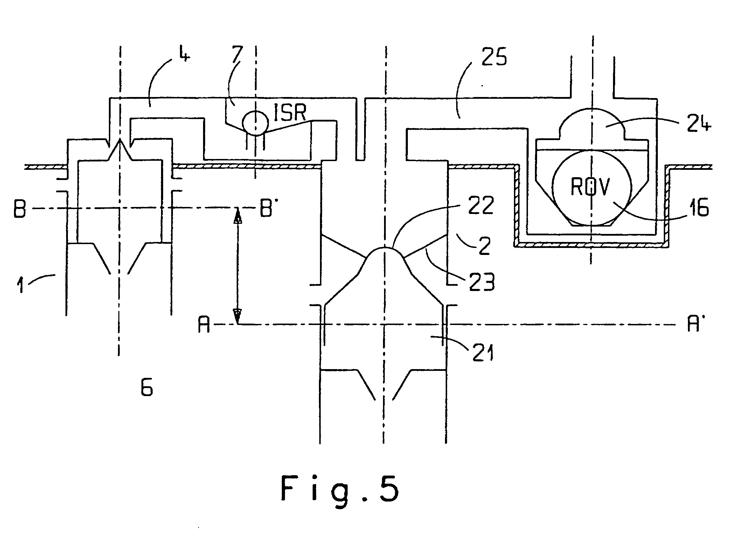

A la figure 5, cette fonction ROV n'est plus assurée que par un dispositif ROV unique 24 placé en aval de la capacité 2, dans le conduit 25 menant au canister (non illustré).

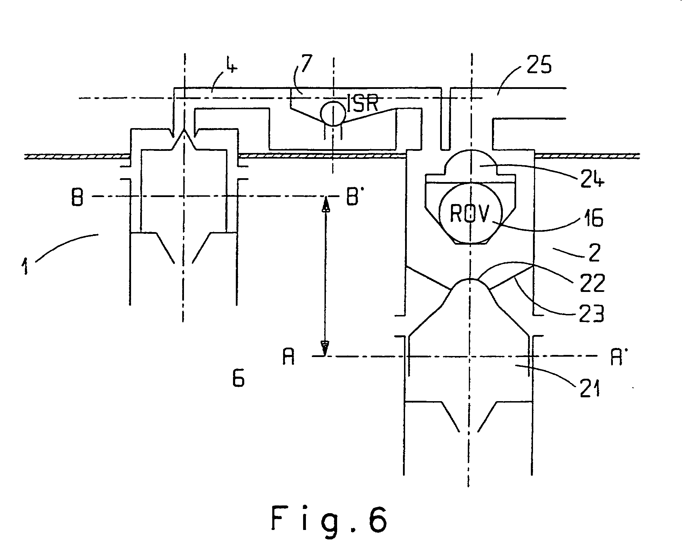

La figure 6 illustre un système de mise à l'air semblable à celui de la figure 5 où le dispositif ROV unique 24 a cependant été intégré dans la partie supérieure du volume de la capacité 2.

La présence du clapet 21 dans les systèmes illustrés aux figures 4 à 6 permet aussi de remplir une fonction supplémentaire particulièrement intéressante, à savoir déterminer le volume utile du réservoir correspondant au déclenchement automatique du pistolet de la pompe de remplissage, tel qu'on le trouve dans les stations-service. En effet, en fin d'opération de remplissage du réservoir par du carburant au moyen d'un tel pistolet, dès que le niveau de carburant atteint le niveau repéré AA' sur les figures 4 à 6, le clapet 21 se ferme et limite le débit de sortie des vapeurs à celui qui s'effectue encore par le clapet principal 1 et permet une montée en pression dans le réservoir et l'accumulation du carburant dans la tubulure de remplissage de manière à provoquer le déclenchement du pistolet et interrompre l'introduction de carburant.

## Revendications

1. Système de mise à l'air d'un réservoir à liquide comprenant, d'une part, un clapet à flotteur disposé dans le réservoir, en communication avec un conduit de mise à l'air et, d'autre part, un volume fermé interne au réservoir et muni d'un dispositif de vidange, qui fait office de capacité destinée à recueillir et retenir des entraînements éventuels de liquide provenant du réservoir, **caractérisé en ce que** le clapet à flotteur est situé hors du volume de la capacité et est relié à celle-ci au moyen du conduit du circuit de mise à l'air.

2. Système de mise à l'air selon la revendication précédente, **caractérisé en ce qu'**il comprend un dispositif d'interdiction de sur-remplissage (ou « ISR ») logé dans la partie supérieure de la capacité.

3. Système de mise à l'air selon une quelconque des revendications précédentes, **caractérisé en ce que** le clapet à flotteur surmonte un dispositif à bille dense reposant dans un puits ajouré ayant pour fonction d'entraîner la fermeture du clapet en cas de retournement du réservoir (fonction « ROV » ou « Roll-Over-Valve »).

4. Système de mise à l'air selon une quelconque des revendications précédentes, **caractérisé en ce que** la capacité comprend, dans sa partie supérieure, afin d'assurer une fonction ROV, une cage à puits ajouré dans laquelle repose une bille dense qui, lorsqu'elle se déplace, repousse vers le haut une soupape capable d'obturer le conduit de sortie.

5. Système de mise à l'air selon la revendication 1, **caractérisé en ce qu'**il comprend un dispositif ISR situé en un point du conduit de mise à l'air reliant le clapet à flotteur à la capacité, en amont de celle-ci.

6. Système de mise à l'air selon une quelconque des revendications précédentes, **caractérisé en ce que** la vidange de la capacité s'effectue via l'ouverture d'un deuxième clapet à flotteur monté sous la capacité et dont le flotteur coulisse dans un fût plongeant dans le réservoir et ouvre une soupape constituée par la coopération d'un pointeau solidaire du flotteur et d'une ouverture située dans le fond de ladite capacité.

7. Système de mise à l'air selon une quelconque des revendications précédentes, **caractérisé en ce qu'**une fonction ROV est assurée par un dispositif à bille dense disposé en un point d'un conduit reliant la capacité à un canister, en aval de celle-ci.

8. Système de mise à l'air selon une quelconque des revendications 1 à 6, **caractérisé en ce qu'**une fonction ROV est assurée par un dispositif à bille dense situé à l'intérieur de la capacité, dans la partie supérieure de celle-ci, qui actionne une soupape capable de fermer l'orifice de sortie de la capacité débouchant dans le conduit menant à un canister.

9. Système de mise à l'air selon une quelconque des revendications 1 à 6, **caractérisé en ce qu'**une fonction ROV est assurée par deux dispositifs à bille dense, le premier disposé sous le clapet à flotteur principal et le deuxième sous le clapet à flotteur qui obture le fond de la capacité.

10. Utilisation du système de mise à l'air selon une quelconque des revendications précédentes pour mettre à l'air un réservoir à carburant dans un véhicule automobile.

## Claims

1. System for the venting of a liquid tank, comprising, on the one hand, a float valve arranged in the tank, in communication with a venting pipe, and, on the other hand, a closed volume internal to the tank and provided with an emptying device, the said volume functioning as a capacity intended for collecting and retaining any possible entrainments of liquid coming from the tank, **characterized in that** the float valve is located outside the volume of the capacity and is connected to the latter by means of the pipe of the venting circuit.

2. Venting system according to the preceding claim, **characterized in that** it comprises an overfilling prevention device (or "ISR") housed in the upper part of the capacity.

3. Venting system according to either one of the preceding claims, **characterized in that** the float valve surmounts a high-density ball device resting in a perforated well and having the function of causing the closing of the valve in the event of the overturning of the tank ("ROV" or "roll-over valve" function).

4. Venting system according to any one of the preceding claims, **characterized in that** the capacity comprises, in its upper part, in order to ensure an ROV function, a cage which has a perforated well and in which rests a high-density ball which, when it is displaced, pushes upwards a valve capable of shutting off the outlet pipe.

5. Venting system according to Claim 1, **characterized in that** it comprises an ISR device located at a point on the venting pipe connecting the float valve to the capacity, upstream of the latter.

6. Venting system according to any one of the preceding claims, **characterized in that** the emptying of the capacity takes place via the orifice of a second float valve which is mounted below the capacity and the float of which slides in a stem submerged in the tank and opens a valve formed by the cooperation of a needle integral with the float and of an orifice located in the bottom of the said capacity.

7. Venting system according to any one of the preceding claims, **characterized in that** an ROV function is ensured by a high-density ball device arranged at a point on a pipe connecting the capacity to a canister, downstream of the said capacity.

8. Venting system according to any one of Claims 1 to 6, **characterized in that** an ROV function is ensured by a high-density ball device located inside the capacity, in the upper part of the latter, the said device actuating a valve capable of closing the outlet port of the capacity opening into the pipe leading to a canister.

9. Venting system according to any one of Claims 1 to 6, **characterized in that** an ROV function is ensured by two high-density ball devices, the first arranged below the main float valve and the second below the float valve which shuts off the bottom of the capacity.

10. Use of the venting system according to any one of the preceding claims, for venting a fuel tank in a motor vehicle.

## Patentansprüche

1. Entlüftungssystem für einen Flüssigkeitsbehälter mit einerseits einem Schwimmerventil, das in dem Behälter in Verbindung mit einer Entlüftungsleitung angeordnet ist, und anderseits einem geschlossenen Innenraum innerhalb des Behälters, der einen Aufnahmeraum zum Sammeln und Zurückhalten allfälliger, aus dem Behälter kommender Flüssigkeit enthält und mit einer Ablaßvorrichtung versehen ist, **dadurch gekennzeichnet, daß** das Schwimmerventil außerhalb des Aufnahmeraumes angeordnet und mit diesem über die Leitung des Entlüftungskreises verbunden ist.

2. Entlüftungssystem nach dem vorhergehenden Anspruch, **dadurch gekennzeichnet, daß** es eine Vorrichtung zur Verhinderung einer Überfüllung (oder «ISR») aufweist, die im oberen Teil des Flüssigkeitsaufnahmeraumes angeordnet ist.

3. Entlüftungssystem nach einem der vorhergehenden Ansprüche, **dadurch gekennzeichnet, daß** das Schwimmerventil eine Vorrichtung mit einer schweren Kugel überlagert, die auf einem Durchlaß ruht und zur Aufgabe hat, das Schließen des Ventils im Falle eines Umdrehens des Behälters zu bewirken (Funktion «ROV» oder «Roll-Over-Valve»).

4. Entlüftungssystem nach einem der vorhergehenden Ansprüche, **dadurch gekennzeichnet, daß** derFlüssigkeitsaufnahmeraum in seinem oberen Teil zur Sicherung einer ROV-Funktion einen Schaft mit einem Durchlaß aufweist, in dem eine schwere Kugel ruht, die bei ihrer Verlagerung ein Ventil nach oben drückt, das befähigt ist, die Auslaßleitung zu verschließen.

5. Entlüftungssystem nach Anspruch 1, **dadurch gekennzeichnet, daß** es eine ISR-Vorrichtung aufweist, die an einem Punkt der das Schwimmerventil mit dem Flüssigkeitsaufnahmeraum verbindenden Lüftungsleitung stromaufwärts des Aufnahmeraumes angeordnet ist.

6. Entlüftungssystem nach einem vorhergehenden Ansprüche, **dadurch gekennzeichnet, daß** das Entleeren des Flüssigkeitsaufnahmeraumes über das Öffnen eines zweiten Schwimmerventiles erfolgt, das unterhalb des Flüssigkeitsaufnahmeraumes angeordnet ist und dessen Schwimmer in einem in den Behälter ragenden Schaft gleitet, wobei der Schwimmer ein Ventil öffnet, das durch eine mit einer Öffnung im Boden des Flüssigkeitsaufnahmeraumes zusammenwirkende Schwimmernadel gebildet ist.

7. Entlüftungssystem nach einem der vorhergehenden Ansprüche, **dadurch gekennzeichnet, daß** eine ROV-Funktion durch eine Vorrichtung mit schwerer Kugel sichergestellt wird, die an einem Punkt einer den Flüssigkeitsaufnahmeraum mit einem Kanister verbindenden Leitung stromabwärts des Aufnahmeraumes angeordnet ist.

8. Entlüftungssystem nach einem der Ansprüche 1 bis 6, **dadurch gekennzeichnet, daß** eine ROV-Funktion durch eine Vorrichtung mit schwerer Kugel sichergestellt wird, die im Inneren des Flüssigkeitsaufnahmeraumes im oberen Teil desselben angeordnet ist, und die ein Ventil betätigt, das befähigt ist, die Austrittsöffhung des Flüssigkeitsaufnahmeraumes zu verschließen, die in die zum Kanister führende Leitung mündet.

9. Entlüftungssystem nach einem der Ansprüche 1 bis 6, **dadurch gekennzeichnet, daß** eine ROV-Funktion durch zwei Vorrichtungen mit schwerer Kugel sichergestellt wird, von denen die erste unterhalb des Hauptschwimmerventiles und die zweite unterhalb des Schwimmerventiles angeordnet ist, welches den Boden des Flüssigkeitsaufnahmeraumes verschließt.

10. Anwendung eines Entlüftungssystems nach einem der vorhergehenden Ansprüche, um einen Kraftstoffbehälter in einem Kraftfahrzeug zu entlüften.
